# DEMANDE DE BREVET EUROPEEN

(11) **EP 0 693 396 A1**
(43) Date de publication de la demande: **24.01.1996**
(21) Numéro de dépôt: 95401571.5
(22) Date de dépôt: 30.06.1995
(51) Int. Cl.: B60P 3/39

(54) **Installation de couchage pour cabines de conduite de véhicules routiers**

(30) Priorité: 22.07.1994 FR 9409076
(71) Demandeur: RENAULT VEHICULES INDUSTRIELS, F-69000 Lyon (FR)
(72) Inventeur: Hadjenian, Robert, F-38783 Estrablin (FR)
(74) Mandataire: Ernst-Schonberg, Michel

(57) **Abrégé**

Installation de couchage pour cabines de conduite de véhicules routiers comportant deux couchettes superposées (6, 7) montées derrière le siège du conducteur et le siège du convoyeur, respectivement accolées à la paroi arrière (1) de limitation de la cabine et disposées entre les parois latérales de celle-ci, et dans laquelle la couchette supérieure (7) est fixée de manière articulée à la cabine par l'un de ses côtés longitudinaux (8a) et est soutenue par son autre côté longitudinal (8b) d'une part dans la position de couchage et d'autre part dans une position dans laquelle ladite couchette supérieure sert d'élément de siège à la couchette inférieure lorsque cette dernière est utilisée comme surface d'assise d'une banquette de transport de passagers, caractérisée par le fait que la couchette inférieure (6) possède le long de son côté longitudinal (62b) opposé à celui accolé à la paroi arrière (1) de la cabine, une partie repliable (63) au contact de la face inférieure (6i) de la couchette (6) et des moyens de suspension articulés (20, 21, 22) sur les côtés extrêmes (61) de la couchette respectivement accrochés à ladite paroi (1) permettant la transformation de la couchette en banquette dans laquelle la partie non repliable (65) de la couchette constitue une surface d'assise et dans laquelle une barre longitudinale (64) de retenue fixée à la partie repliable prend appui sur la paroi de recouvrement (3) du moteur.

## Description

L'invention concerne une installation de couchage pour cabines de conduite de véhicules routiers comportant deux couchettes superposées montées derrière le siège du conducteur et le siège du convoyeur, respectivement accolées à la paroi arrière de limitation de la cabine et disposées entre les parois latérales de celle-ci, et dans laquelle la couchette supérieure est fixée de manière articulée à la cabine par l'un de ses côtés longitudinaux et est soutenue par son autre côté longitudinal d'une part dans la position de couchage et d'autre part dans une position dans laquelle ladite couchette supérieure sert d'élément de dossier à la couchette inférieure lorsque cette dernière est utilisée comme surface d'assise pour une banquette de transport de passagers.

Le problème non résolu sur une telle assise décrite par exemple dans le brevet FR-A-1584361 est qu'elle ne permet pas de s'asseoir commodément à cause de son faible écartement de la rangée des sièges du conducteur et du convoyeur.

Lors des haltes sur les aires de repos en bordure de route, il n'est pas rare que le conducteur soit amené à s'asseoir sur une telle banquette pour manger ou pour prendre un peu de repos. Par contre en service roulant le conducteur peut être amené à transporter des passagers ou des manutentionnaires spécialisés au déchargement du véhicule.

L'invention a donc pour but de fournir une installation de couchage pour cabines de conduite dans laquelle la couchette inférieure peut jouer aussi bien le rôle d'une assise de banquette que celui d'une couchette.

Selon l'invention, ce problème est résolu par le fait que la couchette inférieure possède le long de son côté longitudinal opposé à celui accolé à la paroi arrière de la cabine, une partie repliable au contact de la face inférieure de la couchette et des moyens de suspension articulés sur les côtés extrêmes de la couchette respectivement accrochés à ladite paroi permettant la transformation de la couchette en banquette dans laquelle, la partie non repliable de la couchette constitue une surface d'assise et dans laquelle une barre longitudinale de retenue fixée à la partie repliable prend appui sur la paroi de recouvrement du moteur.

Une cabine de conduite ainsi installée peut donc offrir un emplacement à des passagers supplémentaires éventuels. La disposition de la couchette inférieure joue ici un rôle intéressant dans le sens que les deux portions de la couchette pliée délimitent sous la banquette un emplacement de rangement du couchage, d'objets et produits divers sans nécessité d'arrimage dans la cabine. Il s'ensuit que la mise en place de la banquette supplémentaire en correspondance avec la couchette inférieure est grandement facilitée.

L'invention est expliquée plus précisément ci-après, avec d'autres détails, en référence aux dessins annexés dans lesquels :
- la figure 1 est une élévation latérale d'une cabine de conduite dont on a enlevé le côté extérieur dans le but de montrer l'installation de couchage en position d'utilisation,
- la figure 2 représente une coupe transversale de l'installation de couchage en position d'utilisation,
- la figure 3 représente une vue en coupe transversale de l'installation de couchage en position intermédiaire de transformation en banquette,
- la figure 4 est une vue en coupe transversale de l'installation de couchage transformée, dans laquelle une banquette supplémentaire a été réalisée à la suite de la transformation de l'installation.

Les dessins montrent l'intérieur d'une cabine de véhicule routier, limitée notamment par une paroi arrière 1, des parois latérales 2 et la paroi de recouvrement 3 du moteur. Le plancher supporte une rangée de sièges constituée par exemple par le siège 4 du conducteur et par le siège 5 du convoyeur. Une installation de couchage selon l'invention se trouve dans l'espace compris entre la paroi arrière 1 et la rangée de sièges précitée. L'installation de couchage est constituée par une couchette inférieure 6 et par une couchette supérieure 7 respectivement accolées à la paroi arrière 1 et disposées entre les deux parois latérales 2.

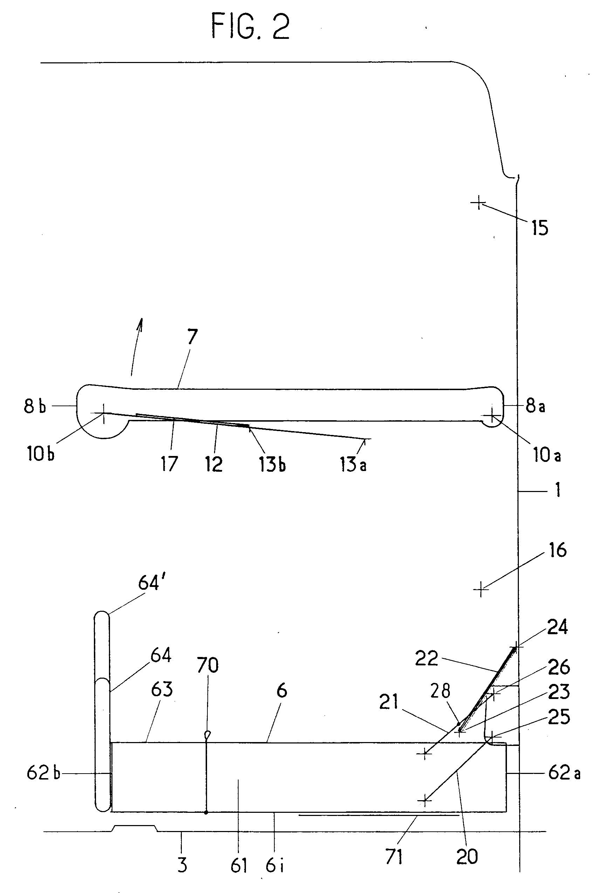

Comme montré à la figure 2, la couchette supérieure 7 est flexible et comprend deux côtés longitudinaux 8a, 8b dont l'un 8a est accolé à la paroi arrière 1.

A proximité du côté 8a, s'étend longitudinalement un axe 10a intégré à la couchette et engagé dans deux paliers d'articulation-support respectivement fixés aux parois latérales 2.

Le côté longitudinal 8b est également traversé longitudinalement par un axe 10b dont les extrémités portent respectivement un bras tendeur 12 articulé autour d'un axe 13a fixé sur la paroi 2. La paroi 2 porte par ailleurs des supports de maintien latéraux 14 des extrémités de l'axe 10a et 13b.

Un autre bras de tension 17 repliable est articulé autour d'un axe fixe 13b et assure le blocage du bras 12 lorsque la couchette 7 est en position d'utilisation et dans laquelle l'ensemble des bras 12 et 17 sont en appui sur les axes 13a et 13b auxquels peuvent être adjoints des verrous de blocage solidaires des parois latérales opposées 2.

Un ancrage latéral inférieur 16 du côté longitudinal 8a et l'ancrage latéral supérieur 15 sont localisés au-dessus et au dessous de l'articulation 10a du côté longitudinal 8a.

L'ancrage latéral inférieur 16 permet la retenue de l'axe 10a lorsque l'ancrage latéral supérieur 15 assure la retenue de l'axe 10b.

La couchette inférieure 6 est accrochée et suspendue sur la paroi arrière 1 de la cabine par deux ensembles de leviers 20, 21 sensiblement parallèles respectivement ancrés sur les côtés extrêmes opposés de la couchette en association avec des ressorts compensateurs 22. Chaque ressort compensateur 22 d'une partie du poids de la couchette est monté en tension entre un premier ancrage 23 porté par le levier 21 correspondant et un ancrage 24 porté par la paroi arrière 1 de la cabine, localisé au-dessus des ancrages respectifs représentés par des axes 25, 26 fixés à des niveaux différents sur la paroi 1, pour assurer l'articulation des leviers de suspension 20, 21 d'un même ensemble.

Dans le but de permettre la transformation rapide de la couchette inférieure en banquette de transport de passagers, celle-ci possède le long de son côté longitudinal 62b, opposé au côté longitudinal 62a accolé à la paroi 1, une partie avant repliable 63 au contact d'une partie non repliable 61 de la couchette inférieure 6.

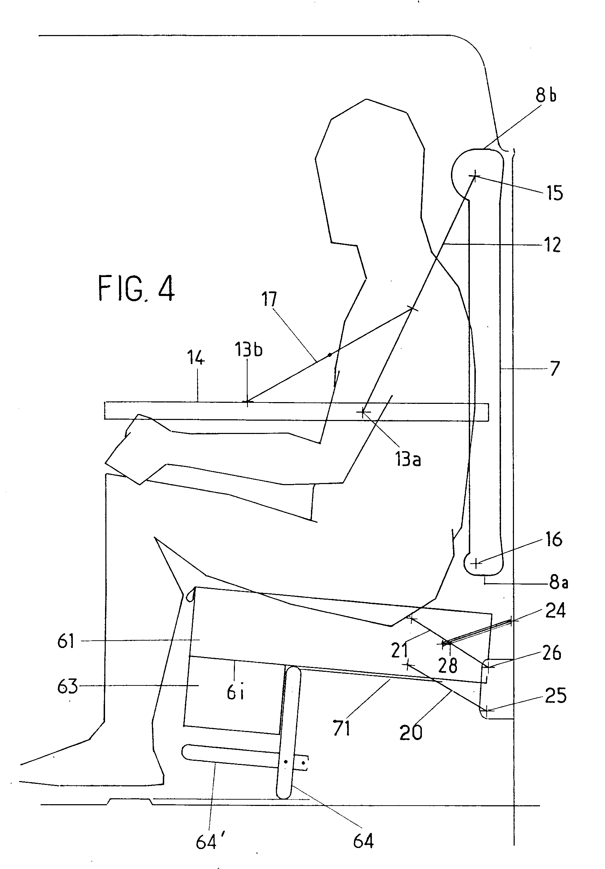

La partie avant repliable 63 est limitée par au moins une barre longitudinale 64 qui possède un arceau médian escamotable 64'. Ainsi que cela est représenté à la figure 4, la partie avant 63 est repliable au contact de la face inférieure 6i de la partie non repliable 61 tandisque l'arceau repliable 64' permet à la barre 64 d'assurer la fonction de pied support lorsque la couchette 6 remplit la fonction de banquette d'appoint de transport de passagers dans la cabine.

Dans le but de faciliter la manipulation de la couchette 6, le levier 21 de chaque ensemble est porteur d'un axe charnière 28 de pliage des segments avant et arrière du levier 21 dans le but de rapprocher localement les leviers 20, 21 et de limiter l'amplitude du mouvement de la couchette 6 au cours de sa manipulation.

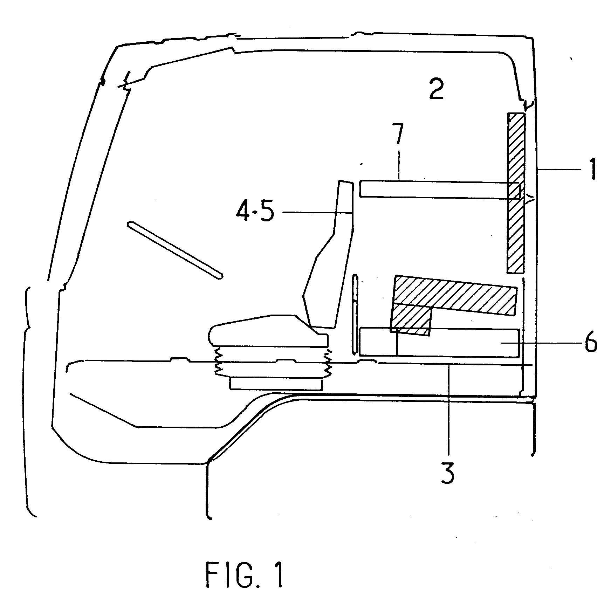

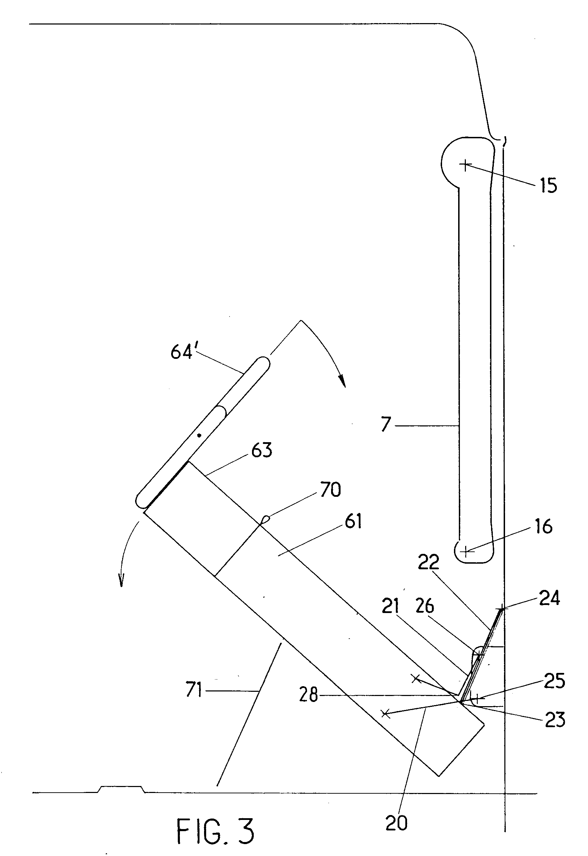

Les différentes phases de transformation de l'installation de couchage représenté à la figure 1 sont illustrées ci-après en référence aux figures 3 et 4.

On désolidarise l'axe 10a de la couchette supérieure 7 de la paroi latérale 2 et on replie le bras de tension 17. La couchette supérieure 7 se replie autour d'un axe virtuel YY'.

Cette manière de procéder autorise la rotation de la couchette autour de l'axe 13a fixé à la paroi 2 par l'intermédiaire des supports de maintien 14 et à la fixation de l'axe 10a sur l'ancrage latéral inférieur 16.

Pour constituer le dossier de la banquette, on soulève ensuite la couchette 7 pour fixer l'axe 10b à l'ancrage latéral supérieur 15.

On rabat de 90° l'arceau repliable 64' vers l'arrière.

On procède ensuite à la manipulation de la couchette inférieure 6 en soulevant l'ensemble de celle-ci par une sangle 70.

Le ressort d'assistance éécompense le poids de la couchette et permet le pliage de l'arceau 64' ainsi que la manipulation de la partie avant 63.

Il est alors possible de replier la partie avant 63 de la couchette pour réaliser la surface d'assise de la banquette de transport.

Sans sortir du cadre de l'invention il est également possible de maintenir la couchette 6 en position soulevée en stabilisant celle-ci dans une position relevée au moyen d'une béquille de secours 71.

## Revendications

**1)** Installation de couchage pour cabines de conduite de véhicules routiers comportant deux couchettes superposées (6, 7) montées derrière le siège du conducteur et le siège du convoyeur, respectivement accolées à la paroi arrière (1) de limitation de la cabine et disposées entre les parois latérales (2) de celle-ci, et dans laquelle la couchette supérieure (7) est fixée de manière articulée à la cabine par l'un de ses côtés longitudinaux (8a) et est soutenue par son autre côté longitudinal (8b) d'une part dans la position de couchage et d'autre part dans une position dans laquelle ladite couchette supérieure sert d'élément de siège à la couchette inférieure lorsque cette dernière est utilisée comme surface d'assise d'une banquette de transport de passagers, caractérisée par le fait que la couchette inférieure (6) possède de manière en soi connue le long de son côté longitudinal (62b) opposé à celui accolé à la paroi arrière (1) de la cabine, une partie repliable (63) et que ladite partie est repliable au contact de la face inférieure (6i) de la couchette (6) et que des moyens connus de suspension articulés (20, 21, 22) sur les côtés extrêmes (61) de la couchette sont respectivement accrochés à ladite paroi (1) permettant la transformation de la couchette en une banquette dans laquelle la partie non repliable (65) de la couchette constitue une surface d'assise et dans laquelle une barre longitudinale (64) de retenue fixée à la partie repliable prend appui sur la paroi de recouvrement (3) du moteur.

**2)** Installation de couchage selon la revendication 1, caractérisée par le fait que les moyens de suspension de la couchette inférieure sont constitués par deux ensembles de leviers sensiblement parallèles (20, 21) montés à articulation autour d'axes fixés (25, 26) à des niveaux différents et portés par la paroi (1) de la cabine.

**3)** Installation de couchage selon la revendication 2, caractérisée par le fait que les moyens de suspension (20, 21, 22) de la couchette inférieure (6) intègrent au moins un ressort (22) compensateur partiel du poids de la couchette, monté en tension entre un ancrage (23) porté par un levier 21 de suspension et un ancrage (24) porté par la paroi arrière (1) de la cabine et que ce dernier est localisé au-dessus des ancrages respectifs des leviers de suspension (20, 21) d'un même ensemble.

**4)** Installation de couchage selon l'une quelconque des revendications 2 ou 3, caractérisée par le fait qu'une partie (21) des leviers de suspension constituent des genouillères.

**5)** Installation de couchage selon l'une quelconque des revendications 1 à 4, caractérisée par le fait que la paroi latérale de la cabine porte deux ancrages (15, 16) des côtés longitudinaux (8a, 8b) de la couchette supérieure (7) localisés au dessus et en dessous de l'articulation du côté longitudinal (8a) de ladite couchette (7) dans une position dans laquelle cette dernière est utilisée comme surface de dossier d'une banquette de transport de passagers.
